# EUROPÄISCHE PATENTSCHRIFT

(11) **EP 0 610 710 B1**
(45) Veröffentlichungstag und Bekanntmachung des Hinweises auf die Patenterteilung: **06.11.1996**
(21) Anmeldenummer: 94100992.0
(22) Anmeldetag: 24.01.1994
(51) Int. Cl.: H02B 1/052

(54) **Vorrichtung zur lösbaren Befestigung von elektrischen Installationsgeräten**
Device for detachable fixing electric installation apparatus
Dispositif démontable pour fixer des appareils d'installation électriques

(30) Priorität: 04.02.1993 DE 9301558 U
(43) Veröffentlichungstag der Anmeldung: 17.08.1994
(73) Patentinhaber: SIEMENS AKTIENGESELLSCHAFT, 80333 München (DE)
(72) Erfinder: Glas, Anton, Dipl.-Ing., D-93057 Regensburg (DE)

(56) Entgegenhaltungen:
- DE-A- 3 149 310

## Beschreibung

Die Erfindung bezieht sich auf eine Vorrichtung zur lösbaren Befestigung von elektrischen Installationsgeräten an Montageschienen.

Eine derartige, aus der DE 25 23 197 bekannte Vorrichtung weist einen auf die Montageschiene aufschnappbaren U-förmigen Rastschieber auf. Dieser ist in besonderer Weise ausgebildet und angebracht, damit er sich nicht nur für Geräte mit geringer Baubreite verwenden läßt, sondern damit er sich auch einfach am Gerät montieren und sicher halten läßt. Gemäß Zielsetzung soll sich der Rastschieber im Bedarfsfall ebenso einfach wieder entfernen und beispielsweise gegen eine Schraubbefestigung austauschen lassen, ohne dazu erst das betreffende Gerät als solches demontieren und wieder zusammensetzen zu müssen. Um dies zu erreichen, umgreift der U-förmige Rastschieber das Gerät und greift mit Gleitfortsätzen an den Schenkelenden in Führungsnuten des Geräts ein. In seinem Quersteg ist der Rastschieber mit einer Aussparung für das Einsetzen einer Schraubendruckfeder versehen.

Weiterhin sind elektrische und elektronische Schaltgeräte (siehe DE-OS 27 12 893) bekannt, die sowohl zur Schnappbefestigung an Profilschienen als auch zur Schraubbefestigung geeignet sind. Hierzu hat der Sockel des Geräts an seiner Unterseite einen Einschnitt und beidseitig des Einschnitts angeordnete Nocken, von welchen wenigstens einer einen quer verschiebbaren Schieber aufweist und zur Schraubbefestigung Flansche mit Schraublöchern besitzt. Außerdem sind an beiden Nocken quer verschiebbare Schieber vorgesehen, welche bei Schienenbefestigung mit der Gehäuseaußenkontur fluchten. Zur Schraubbefestigung können die Schieber in eine die Gehäuseseitenwände jeweils mit einem ein Schraubloch aufweisenden Teilbereich seitlich überragende Position gebracht werden.

Schließlich ist aus DE-A-3 149 310 eine Vorrichtung bekannt, die zur lösbaren Befestigung von elektrischen Installationsgeräten an Montageschienen vorgesehen ist. Die Vorrichtung ist mit mindestens einem ersten auf die Montageschiene aufschnappbaren, U-förmigen Rastschieber versehen, der an der Unterseite des Isolierstoffgehäuses, zwischen zwei Stellungen mittels Führungsmitteln verstellbar ist und durch Federkraft gehalten ist.

In einer ersten Stellung ist das Gerät an der Unterseite mit dem Rastschieber einen Einschnitt bildend auf der Montageschiene aufschnappbar. In einer zweiten Stellung, weist der Rastschieber in einem die Geräteaußenfläche überragenden Bereich ein Schraubloch auf.

Üblicherweise wird eine Mehrzahl von Installationsgeräten in Form von Sicherungsautomaten, Fehlerstrom-Schutzschaltern, Treppenlicht-Zeitschaltern und dergleichen im Hausanschluß-kasten, Schalt- und Verteilungsanlagen stationär zusammengefaßt auf einer gemeinsamen Tragschiene durch Schnapptechnik montiert und z.B. über eine Stromschiene miteinander verschient. Um ein Einzelgerät mit einer oben beschriebenen Schnappbefestigung aus dem Verband herauszulösen, muß zunächst die Stromschiene von allen Geräten gelöst und abgenommen werden. Entweder an der Unterseite vorstehende Rastschieber oder vorstehende Nocken verhindern es bei den bekannten Schnappbefestigungen, daß lediglich die Verbindung des Einzelgeräts mit der Stromschiene gelöst werden muß, um durch Herausziehen des Rastschiebers eine ebene Grundfläche zu schaffen, die das Abziehen des Installationsgerätes von der Montageschiene ermöglicht.

Daher liegt der Erfindung die Aufgabe zugrunde, eine Vorrichtung der obengenannten Art zur Schnapp- und Schraubbefestigung unter Vermeidung der erwähnten Einschränkungen zu schaffen. Die Aufgabe wird gelöst durch eine Vorrichtung mit den Merkmalen nach Anspruch 1, die ein problemloses Auswechseln eines Einzelgeräts aus einem Verband ermöglicht. Nach seitlichem Versenken der beiden Rastschieber ergibt sich nämlich eine vollkommen ebene Grundfläche, die ein beliebiges Verschieben des Geräts auf der Montageschiene zuläßt. Durch die Versenkbewegung der Rastschieber in die Grundfläche bietet sich außerdem eine für eine solide Schraubbefestigung notwendige ebene Montagefläche. Die erfindungsgemäße Lösung bringt weiterhin den Vorteil der geringeren Bautiefe bei Schraubbefestigung mit sich.

Vorteilhafte Ausbildungen der Führungsmittel sind den Ansprüchen 3, 4 und 5 zu entnehmen.

Eine Ausführungsform, die das Verharren des Rastschiebers in seinen beiden Stellungen auf einfache Weise gewährleistet, ist gegeben, wenn mindestens eine die Federkraft bereitstellende Spiralfeder vorhanden ist, die einerseits am Rastschieber und andererseits am Isolierstoffgehäuse derart angreift, daß sie die beiden Rastschieber-Stellungen jeweils beibehält, indem beim Überwechseln zwischen beiden Rastschieber-Stellungen eine Kraftrichtungsumkehr der Spiralfeder erfolgt.

Ein Ausführungsbeispiel der Erfindung wird im folgenden anhand der Zeichnung näher erläutert.

Es zeigen:
- FIG 1: eine Seitenansicht der Vorrichtung am Sockel eines Isolierstoffgehäuses im auf einer Montageschiene aufgeschnappten Zustand,
- FIG 2: einen Schnitt durch die Vorrichtung gemäß FIG 1,
- FIG 3: eine Seitenansicht der Vorrichtung am Sockel eines Isolierstoffgehäuses in Rastschieber-Stellung für Schraubbefestigung.

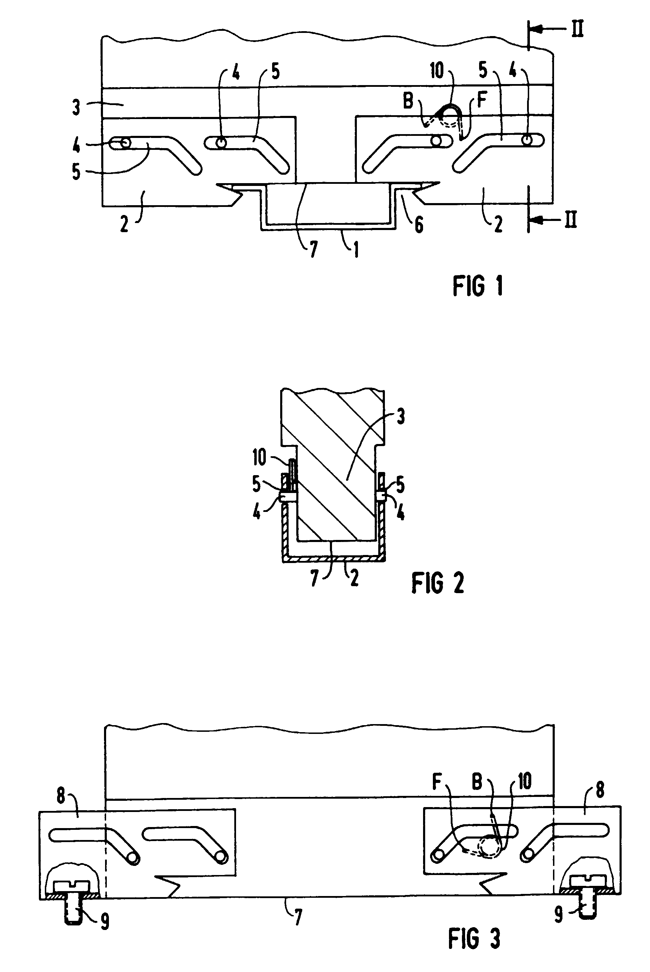

In FIG 1 ist ein Isolierstoffgehäuse mit der erfindungsgemäßen Vorrichtung dargestellt, die zwei U-förmige, um den Sockel des Gehäuses 3 herumgreifende Rastschieber 2 umfaßt. Die Rastschieber sind auf einer Montageschiene 1, hier eine Hutschiene, aufgeschnappt und fluchten seitlich mit den Außenflächen des Gehäuses 3. Sie sind, über Nuten 5 am Rastschieber 2 und Zapfen 4 am Gehäuse 3 geführt (siehe auch FIG 2), in die Grundfläche 7 des Gehäusesockels versenkbar und befinden sich dann in der Stellung zur Schraubbefestigung gemäß FIG 3, in der ein Schraubloch 9 in dem die Außenfläche des Gehäuses 3 überragenden Bereich des Rastschiebers 2 frei zugänglich ist. Durch die Kraft einer nur wenig Einbauraum beanspruchenden Spiralfeder 10, die einerseits im Gehäuse 3 an einem fixen Befestigungspunkt F und andererseits im Rastschieber 2 an einem beweglichen Befestigungspunkt B eingreift, wird der Rastschieber 2 jeweils in seinen beiden Stellungen für Schnapp- und Schraubbefestigung fixiert. Durch die Wahl der Angriffspunkte der Spiralfeder 10 kehrt sich beim Überwechseln von einer Rastschieber-Stellung in die andere ihre Kraftrichtung um.

## Patentansprüche

1. Vorrichtung zur lösbaren Befestigung von elektrischen Installationsgeräten an Montageschienen (1), insbesondere Hutschienen mit mindestens einem ersten auf die Montageschiene (1) aufschnappbaren, U-förmigen Rastschieber (2), der an der Unterseite des Isolierstoffgehäuses (3), diese umfassend zwischen zwei Rastschieber-Stellungen mittels Führungsmitteln (4, 5) verstellbar ist und durch Federkraft gehalten ist, wobei in der ersten Rastschieber-Stellung das Gerät an der Unterseite mit dem Rastschieber (2) einen Einschnitt (6) bildend auf der Montageschiene (1) aufschnappbar ist und in der zweiten Rastschieber-Stellung, die durch Versenkbewegung des Rastschiebers (2) schräg nach außen erreichbar ist und in der die Bodenebene (7) des Einschnitts (6) nach außen erweitert ist, der Rastschieber (2) in einem die Geräteaußenfläche überragenden Bereich (8) ein Schraubloch (9) aufweist.

2. Vorrichtung nach Anspruch 1, **dadurch gekennzeichnet,** daß dem ersten Rastschieber (2) ein zweiter, dem ersten in Aufbau und Halterung gleicher, versenkbarer Rastschieber (2) gegenüberliegt.

3. Vorrichtung nach Anspruch 1 oder 2, **dadurch gekennzeichnet,** daß als Führungsmittel Nuten (5) im Rastschieber (2) zum Eingriff in Zapfen (4) des Isolierstoffgehäuses (3) vorgesehen sind.

4. Vorrichtung nach Anspruch 1 oder 2, **dadurch gekennzeichnet,** daß die Führungsmittel als Ausprägungen des Rastschiebers (2) in Verbindung mit Führungsnuten im Isolierstoffgehäuse (3) ausgeführt sind.

5. Vorrichtung nach Anspruch 1 oder 2, **dadurch gekennzeichnet**, daß als Führungsmittel eine Parallelogrammaufhängung vorgesehen ist.

6. Vorrichtung nach einem der vorangehenden Ansprüche, **dadurch gekennzeichnet**, daß mindestens eine die Federkraft bereitstellende Spiralfeder (10) vorhanden ist, die einerseits am Rastschieber (2) und andererseits am Isolierstoffgehäuse (3) derart angreift, daß sie die beiden Rastschieber-Stellungen jeweils beibehält, indem beim Überwechseln zwischen Rastschieber-Stellungen eine Kraftrichtungsumkehr der Spiralfeder (10) erfolgt.

## Claims

1. Device for the detachable fixing of electrical installation devices to mounting rails (1), in particular top-hat rails having at least a first U-shaped stop slide (2) which can be snapped on to the mounting rail (1), which can be adjusted at the underside of the housing of insulating material (3), surrounding the underside, between two stop-slide positions by way of guide means (4, 5) and which is supported by spring power, whereby in the first stop-slide position the device, forming an indentation (6) with the stop slide (2), can be snapped at the underside on to the mounting rail (1), and in the second stop-slide position, which can be achieved by a lowering movement of the stop slide (2) sloping to the outside and in which the base plane (7) of the indentation (6) is extended to the outside, the stop slide (2) has a screw hole (9) in an area (8) projecting beyond the outer surface of the device.

2. Device according to claim 1, characterized in that opposite the first stop slide (2) there is a second stop slide (2) which can be lowered, the structure and mounting of which are the same as those of the first.

3. Device according to claim 1 or 2, characterized in that as guide means grooves (5) are provided in the stop slide (2) for engagement into lugs (4) of the housing of insulating material (3).

4. Device according to claim 1 or 2, characterized in that the guide means are designed as stamped-out parts of the stop slide (2) in conjunction with guide grooves in the housing of insulating material (3).

5. Device according to claim 1 or 2, characterized in that a parallelogram suspension is provided as guide means.

6. Device according to one of the preceding claims, characterized in that there is at least one spiral spring (10) producing the spring power, which on one side engages on the stop slide (2) and on the other side on the housing of insulating material (3) in such a way that it maintains the two stop-slide positions in each case, in that, upon changing between stop-slide positions, a reversal of the direction of power of the spiral spring (10) takes place.

## Revendications

1. Dispositif destiné à la fixation amovible d'appareils d'installation électrique sur des rails de montage (1), notamment des rails en forme de chapeau, comportant au moins un premier coulisseau d'encliquetage (2) en forme de U pouvant être encliqueté sur le rail de montage (1) qui, à l'aide de moyens de guidage (4, 5), peut être déplacé entre deux positions sur la partie inférieure du boîtier (3) en matériau isolant en enserrant cette dernière, et qui est retenu par la force d'un ressort, l'appareil, dans la première position du coulisseau d'encliquetage, pouvant être encliqueté sur le rail de montage (1), en formant avec le coulisseau d'encliquetage (2) une découpe (6) à sa partie inférieure, et dans la deuxième position du coulisseau d'encliquetage, qui peut être obtenue par un mouvement d'escamotage obliquement vers l'extérieur du coulisseau d'encliquetage (2), et dans laquelle le plan (7) du fond de la découpe (6) est élargi vers l'extérieur, le coulisseau d'encliquetage (2) comporte un trou de vissage (9) dans une partie (8) dépassant de la face extérieure de l'appareil.

2. Dispositif selon la revendication 1, caractérisé par le fait qu'un deuxième coulisseau d'encliquetage (2), qui est agencé et fixé de la même manière que le premier et qui peut être escamoté, est situé à l'opposé du premier coulisseau d'encliquetage (2).

3. Dispositif selon la revendication 1 ou 2, caractérisé par le fait que des rainures (5) sont prévues dans le coulisseau d'encliquetage (2) en tant que moyens de guidage, qui sont destinées à l'insertion de tenons (4) du boîtier (3) en matériau isolant.

4. Dispositif selon la revendication 1 ou 2, caractérisé par le fait que les moyens de guidage sont réalisés sous la forme d'empreintes du coulisseau d'encliquetage (2) en liaison avec des rainures de guidage du boîtier (3) en matériau isolant.

5. Dispositif selon la revendication 1 ou 2, caractérisé par le fait qu'une suspension à parallélogramme est prévue en tant que moyen de guidage.

6. Dispositif selon l'une des revendications précédentes, caractérisé par le fait qu'il est prévu au moins un ressort spiralé (10), qui assure la force de ressort, qui s'applique, d'une part sur le coulisseau d'encliquetage (2) et d'autre part sur le boîtier (3) en matériau isolant, de telle sorte qu'il maintient le coulisseau d'encliquetage dans les deux positions respectives du fait qu'une inversion du sens de la force du ressort spiralé (10) intervient lors du changement entre les deux positions du coulisseau d'encliquetage.
